# EUROPÄISCHE PATENTSCHRIFT

(11) **EP 2 454 793 B1**
(45) Veröffentlichungstag und Bekanntmachung des Hinweises auf die Patenterteilung: **06.06.2018**
(21) Anmeldenummer: 10735234.6
(22) Anmeldetag: 08.07.2010
(51) Int. Cl.: H02J 3/14

(54) **VERFAHREN ZUM BETREIBEN EINES HAUSHALTSGERÄTS UND HAUSHALTSGERÄT**
METHOD FOR OPERATING A DOMESTIC APPLIANCE AND DOMESTIC APPLIANCE
PROCÉDÉ DE FONCTIONNEMENT D'UN APPAREIL ÉLECTROMÉNAGER ET APPAREIL ÉLECTROMÉNAGER

(30) Priorität: 17.07.2009 DE 102009027799
(43) Veröffentlichungstag der Anmeldung: 23.05.2012
(73) Patentinhaber: BSH Hausgeräte GmbH, 81739 München (DE)
(72) Erfinder: BOSEN, Peter, 93161 Sinzing (DE); HÄPP, Claudia, 80639 München (DE)
(86) Internationale Anmeldenummer: PCT/EP2010/059801
(87) Internationale Veröffentlichungsnummer: WO 2011/006826

(56) Entgegenhaltungen:
- EP-A1- 0 268 697
- EP-A1- 0 727 668
- EP-A1- 1 263 108
- EP-A1- 1 717 923
- EP-A2- 1 202 425
- WO-A2-2008/071995

## Beschreibung

Die Erfindung betrifft ein Verfahren zum Betreiben eines Haushaltsgeräts, welches mit elektrischer Energie aus einem elektrischen Versorgungsnetz versorgt wird. Die Erfindung betrifft weiterhin ein Haushaltsgerät. Das Haushaltsgerät umfasst eine interne Steuereinheit zum Steuern von Prozessabläufen des Haushaltsgeräts. Das Haushaltsgerät umfasst außerdem eine Spannungsversorgungseinrichtung zum Koppeln des Haushaltsgeräts mit einem elektrischen Versorgungsnetz, wobei das Haushaltsgerät mit Energie aus dem Versorgungsnetz versorgbar ist.

Es ist bekannt, ein Haushaltsgerät mit einer Kommunikationseinrichtung auszustatten. Über eine solche Kommunikationseinrichtung kann das Haushaltsgerät dann mit anderen im Haushalt befindlichen Geräten Daten austauschen. Eine solche Lösung ist zum Beispiel aus der Druckschrift EP 0 727 668 A1 bekannt. Ein in dieser Druckschrift beschriebenes System umfasst eine Vielzahl von miteinander kommunizierenden Haushaltsgeräten; die Haushaltsgeräte kommunizieren miteinander über einen Kommunikationsbus (zum Beispiel Power Line Communication). An den Kommunikationsbus ist auch ein Messgerät angeschlossen, welches eine von den Haushaltsgeräten aufgenommene Summenleistung misst. Das Messgerät überträgt Daten über den Kommunikationsbus, welche Informationen über die Summenleistung umfassen. Die Haushaltsgeräte können diese Daten abgreifen und ihre Prozesse an die jeweils momentane Summenleistung anpassen. Insbesondere soll die Summenleistung einen vorbestimmten Grenzwert nicht überschreiten. Das Messgerät überträgt auch solche Daten über den Kommunikationsbus, die eine Information über den jeweils aktuellen Strompreis beinhalten. Diese Information empfängt das Messgerät von einem Energieanbieter. Die Haushaltsgeräte können somit ihre Prozessabläufe derart gestalten, dass sie elektrische Energie überwiegend in der Zeit verbrauchen, in welcher der Strompreis am geringsten ist.

Es ist Aufgabe der Erfindung, eine Lösung aufzuzeigen, wie die von einem Energieanbieter zur Verfügung gestellten Informationen besser als im Stand der Technik genutzt werden können.

Diese Aufgabe wird erfindungsgemäß durch ein Verfahren mit den Merkmalen gemäß Patentanspruch 1, wie auch durch ein Haushaltsgerät mit den Merkmalen gemäß Patentanspruch 12 gelöst. Vorteilhafte Ausführungen der Erfindung sind Gegenstand der abhängigen Ansprüche.

Bei einem erfindungsgemäßen Verfahren zum Betreiben eines Haushaltsgeräts wird selbiges Haushaltsgerät mit elektrischer Energie aus einem elektrischen Versorgungsnetz versorgt. Es werden Daten durch eine Steuereinrichtung empfangen, die Informationen über die Versorgung mit der Energie umfassen, wie beispielsweise eine Erzeugungsart der elektrischen Energie und/oder einen Belastungszustand des elektrischen Versorgungsnetzes. Die Steuereinrichtung überprüft, ob ein auf diese Informationen bezogenes vorbestimmtes Kriterium erfüllt ist. Nach Erfülltsein des vorbestimmten Kriteriums erzeugt die Steuereinrichtung ein Steuersignal, welches eine Änderung eines Betriebszustands des Haushaltsgeräts veranlasst.

Also wird der erfindungsgemäße Effekt dadurch erzielt, dass die Steuereinrichtung solche Daten empfangen und verarbeiten kann, die Informationen über die Versorgung mit der Energie umfassen, wie beispielsweise eine Erzeugungsart der elektrischen Energie und/oder einen Belastungszustand des elektrischen Versorgungsnetzes. Unter Berücksichtigung dieser Informationen kann die Steuereinrichtung einen Betriebszustand des Haushaltsgeräts ändern. Demnach ist die Steuereinrichtung in der Lage, von einem Energieanbieter zur Verfügung gestellte Informationen zu nutzen, nämlich insbesondere Informationen über die Erzeugungsart der Energie und/oder den Belastungszustand des Versorgungsnetzes. Auf diesem Wege können die Programmabläufe des Haushaltsgeräts unter Berücksichtigung der Erzeugungsart der elektrischen Energie und/oder unter Berücksichtigung des aktuellen Belastungszustands des elektrischen Versorgungsnetzes gestaltet werden. Zum Beispiel kann ein Programm des Haushaltsgeräts erst dann eingeleitet werden, wenn sichergestellt ist, dass eine "saubere Energie" zur Verfügung steht und/oder das elektrische Versorgungsnetz momentan entlastet ist. Dies erhöht die Umweltfreundlichkeit des Haushaltsgeräts im Vergleich zum Stand der Technik deutlich; denn das Haushaltsgerät verbraucht lediglich elektrische Energie der durch das vorbestimmte Kriterium festgelegten Erzeugungsart und/oder von einem entlasteten elektrischen Versorgungsnetz.

Unter der Erzeugungsart der elektrischen Energie wird hier die Art und Weise verstanden, auf welche die im elektrischen Versorgungsnetz momentan zur Verfügung stehende Energie ursprünglich erzeugt worden ist. Grundsätzlich wird zwischen erneuerbarer Energie und konventioneller Energie unterschieden. Die erneuerbare Energie kann zum Beispiel Bioenergie, also aus Pflanzenöl, Holz, Biowasserstoff und/oder aus Biogas erzeugte Energie, und/oder Solarenergie und/oder aus einem Windkraftwerk erzeugte Energie und/oder aus einem Wasserkraftwerk erzeugte Energie umfassen. Die konventionelle Energie kann Atomenergie und/oder aus Erdgas erzeugte Energie und/oder aus Erdöl erzeugte Energie und/oder aus Kohle erzeugte Energie umfassen. Es kann aber auch unterschieden werden, ob eine Eigenproduktion oder eine Fremdproduktion der Energie vorliegt.

Unter einem Haushaltsgerät wird vorliegend ein Gerät verstanden, dass zur Haushaltsführung eingesetzt wird. Das kann ein Haushaltsgroßgerät sein, wie beispielsweise eine Waschmaschine, ein Wäschetrockner, eine Geschirrspülmaschine, ein Gargerät, eine Dunstabzugshaube, ein Kältegerät, eine Kühlgefrierkombination oder ein Klimagerät. Das kann aber auch ein Haushaltskleingerät sein, wie beispielsweise ein Kaffeevollautomat, eine Küchenmaschine oder ein Gerät zur Warmwasserbereitung.

Vorzugsweise kann das vorbestimmte Kriterium durch eine Eingabe von einer Bedienperson festgelegt werden. Insbesondere können verschiedene Parameter gewählt werden, von denen einige im Folgenden beispielhaft genannt werden.

Es hat sich als besonders umweltfreundlich erwiesen, wenn das vorbestimmte Kriterium umfasst, dass die Energie, mit welcher das Haushaltsgerät versorgt wird, zumindest einen vordefinierten Anteil von erneuerbarer Energie umfasst. Insbesondere kann das vorbestimmte Kriterium beinhalten, dass die Energie zumindest einen vordefinierten Anteil von Energie aus einem Wasserkraftwerk und/oder einer Solaranlage und/oder einem Windkraftwerk und/oder einem Biomassekraftwerk umfasst. Ein solcher Anteil kann zum Beispiel in einem Wertebereich von 50 % bis 100 %, insbesondere in einem Wertebereich von 70 % bis 100 % liegen. Bei dieser Ausführungsform wird also solche Energie zum Versorgen des Haushaltsgeräts bevorzugt, die auf "sauberem Wege" und umweltfreundlich erzeugt wurde. Insbesondere kann der Wertebereich von der Bedienperson durch eine Eingabe festgelegt werden.

Zusätzlich oder alternativ kann das vorbestimmte Kriterium beinhalten, dass eine den Belastungszustand des Versorgungsnetzes wiedergebende Größe in einem vorbestimmten Wertebereich liegt. Diese Größe kann zum Beispiel ein Prozentsatz oder eine binäre Größe sein. Die Information über den Belastungszustand des Versorgungsnetzes kann also als prozentualer Anteil der Belastung des Versorgungsnetzes oder als eine binäre Information - "Versorgungsnetz überlastet" oder "Versorgungsnetz entlastet" - übermittelt werden. Diese Ausführungsform hat also den Vorteil, dass ein bereits überlastetes Versorgungsnetz nicht zusätzlich durch das Haushaltsgerät belastet wird.

In einer Ausführungsform ist vorgesehen, dass die Steuereinrichtung auch solche Daten empfängt und verarbeitet, die Informationen über einen aktuellen Preis für eine vorbestimmte Menge der Energie umfassen. Dann kann das vorbestimmte Kriterium beinhalten, dass der Preis in einem vorbestimmten Wertebereich liegt. Es kann somit Geld gespart werden; denn das Haushaltsgerät kann seine Hochleistungsverbraucher zum Beispiel erst dann in Betrieb nehmen, wenn der Preis für die Energie am geringsten ist. Insbesondere kann auch eine Inbetriebnahme des gesamten Haushaltsgerätes zeitlich verschoben werden. Insbesondere kann eine obere Grenze für den Preis von der Bedienperson durch eine Eingabe festgelegt werden.

Wie bereits ausgeführt, wird nach Erfülltsein des vorbestimmten Kriteriums der Betriebszustand des Haushaltsgeräts geändert. Dies kann zum Beispiel beinhalten, dass ein zuvor - nämlich beispielsweise durch eine Bedienperson - ausgewähltes Programm des Haushaltsgeräts gestartet oder fortgesetzt wird. Also kann ein gesamtes Programm des Haushaltsgeräts erst dann gestartet werden, wenn eine vorbestimmte Energieart zur Verfügung steht und/oder das elektrische Versorgungsnetz unbelastet ist. Wird ein gesamtes Programm, zum Beispiel ein gesamter Trocknungsprozess eines Wäschetrockners, während der Zeit durchgeführt, in welcher eine bestimmte Energieart zur Verfügung steht und/oder das elektrische Versorgungsnetz entlastet ist, so kommen die Vorteile der Erfindung vollständig zum Tragen.

Das Steuersignal kann die Inbetriebnahme eines elektrischen Verbrauchers des Haushaltsgeräts veranlassen. Dies kann nach Erfülltsein des vorbestimmten Kriteriums entweder zu Beginn eines Programms bzw. Prozesses des Haushaltsgeräts oder auch während dieses Programms erfolgen. Zum Beispiel kann ein Programm des Haushaltsgeräts gestartet werden, wenn das vorbestimmte Kriterium noch nicht erfüllt ist, und der elektrische Verbraucher kann während des Programms nach Erfülltsein des vorbestimmten Kriteriums in Betrieb genommen werden. Zum Beispiel kann ein Schleuderbetrieb einer Waschmaschine, in welchem ein Antriebsmotor bei hohen Drehzahlen betrieben wird, erst dann eingeleitet werden, wenn das vorbestimmte Kriterium erfüllt ist. Somit wird der Programmabschnitt, in welchem das Haushaltsgerät relativ hohe Leistung verbraucht, dann durchgeführt, wenn das Versorgungsnetz entlastet ist und/oder eine bestimmte Energieart zur Verfügung steht.

Bezüglich der Anordnung der Steuereinrichtung sind bei dem Verfahren im Allgemeinen zwei Ausführungsformen sinnvoll möglich. Die Steuereinrichtung kann eine interne Steuereinheit des Haushaltsgeräts sein, nämlich im Haushaltsgerät angeordnet sein. Dann kann mit dem Steuersignal direkt eine Komponente des Haushaltsgeräts, nämlich zum Beispiel ein elektrischer Verbraucher, angesteuert werden, und die interne Steuereinheit kann die Daten von einer geräteexternen Vorrichtung empfangen, nämlich beispielsweise von einem Stromzähler. Intelligente Stromzähler, an die ein Energieanbieter Daten übertragen kann, sind bekannt. Alternativ kann vorgesehen sein, dass die Steuereinrichtung eine von dem Haushaltsgerät getrennte Einrichtung ist, insbesondere eine geräteexterne Vorrichtung, wie zum Beispiel ein Stromzähler selbst. Dann kann das Steuersignal über einen Übertragungskanal an die interne Steuereinheit - zum Beispiel einen Mikrocontroller - des Haushaltsgeräts gesendet werden. Also empfängt bei dieser Ausführungsform die Steuereinheit des Haushaltsgeräts einen Befehl von der externen Steuereinrichtung, welcher die Steuereinheit dazu veranlasst, den Betriebszustand des Haushaltsgeräts zu ändern. Bei dieser Ausführungsform verarbeitet also die externe Steuereinrichtung die Daten betreffend der Informationen über die Versorgung mit der Energie, wie beispielsweise die Erzeugungsart der elektrischen Energie und/oder den Belastungszustand des elektrischen Versorgungsnetzes, und das Haushaltsgerät empfängt lediglich die Befehle von der externen Steuereinrichtung. In diesem Fall kommt das Haushaltsgerät ohne eine zusätzliche Verarbeitung und Analyse der Daten aus, es muss lediglich die Befehle der externen Steuereinrichtung empfangen und auf diese Befehle reagieren können.

Ein erfindungsgemäßes Haushaltsgerät umfasst eine interne Steuereinheit zum Steuern von Prozessabläufen des Haushaltsgeräts. Das Haushaltsgerät umfasst außerdem eine Spannungsversorgungseinrichtung zum Koppeln des Haushaltsgeräts mit einem elektrischen Versorgungsnetz, wobei das Haushaltsgerät mit Energie aus dem Versorgungsnetz versorgbar ist. Das erfindungsgemäße Haushaltsgerät kann in einen Ökomodus überführt werden, in welchem die Informationen über die Versorgung mit der Energie, insbesondere die jeweils augenblicklich zur Verfügung stehende Energieart und/oder der jeweils augenblickliche Belastungszustand des Versorgungsnetzes, berücksichtigt werden. Das Haushaltsgerät kann zum Beispiel eine mit der internen Steuereinheit gekoppelte Bedieneinrichtung umfassen, mittels welcher die interne Steuereinheit in den Ökobetrieb überführt werden kann. Auf diesem Wege wird einer Bedienperson des Haushaltsgeräts die Möglichkeit gegeben, selbst zu entscheiden, ob das Haushaltsgerät die Informationen über die Versorgung mit der Energie, insbesondere die Erzeugungsart der Energie und/oder den Belastungszustand des Versorgungsnetzes, berücksichtigen soll oder nicht.

Wie bereits oben ausgeführt, sind bezüglich der Anordnung der Steuereinrichtung im Allgemeinen zwei Ausführungsformen möglich. In einer ersten Ausführungsform ist die Steuereinrichtung die interne Steuereinheit des Haushaltsgeräts. In einer zweiten Ausführungsform ist die Steuereinrichtung eine von dem Haushaltsgerät getrennte Einrichtung ist, insbesondere eine geräteexterne Vorrichtung, wie zum Beispiel der Stromzähler. In der ersten Ausführungsform umfasst das Haushaltsgerät auch eine mit der internen Steuereinheit gekoppelte Empfangseinrichtung, über welche die interne Steuereinheit Daten von der geräteexternen Vorrichtung empfängt. Die interne Steuereinheit kann solche Daten von der geräteexternen Vorrichtung empfangen und verarbeiten, die Informationen über die Versorgung mit der Energie umfassen, wie beispielsweise eine Erzeugungsart der elektrischen Energie und/oder einen Belastungszustand des elektrischen Versorgungsnetzes. In dem Ökomodus kann die interne Steuereinheit einen Betriebszustand des Haushaltsgeräts unter Ausgabe eines Steuersignals nach Erfülltsein eines auf diese Informationen, insbesondere die Erzeugungsart der Energie und/oder den Belastungszustand des Versorgungsnetzes, bezogenen vorbestimmten Kriteriums ändern. In der zweiten Ausführungsform ist das Haushaltsgerät dazu ausgelegt, dass über einen Übertragungskanal Steuersignale von der geräteexternen Vorrichtung, insbesondere von dem mit der Steuereinrichtung ausgestatteten Stromzähler, an die interne Steuereinheit des Haushaltsgeräts gesendet werden, und dass ein Betriebszustand des Haushaltgerätes anhand dieser Steuersignale geändert wird. Der Übertragungskanal kann auch hier durch eine Sende- bzw. Empfangseinrichtung für eine Datenübertragung gebildet sein. Es ist aber auch denkbar das Steuersignal in Form von Spannungsimpulsen über das hausinterne Spannungsversorgungsnetz zu übertragen. In dem Ökomodus kann somit ein Betriebszustand des Haushaltgerätes anhand von Steuersignalen geändert werden, die von der extern angeordneten Steuereinrichtung an das Haushaltsgerät übertragen werden. Insbesondere kann das Haushaltsgerät mittels solch eines Steuersignals in Betrieb genommen bzw. ein Programm des Haushaltsgerätes gestartet werden.

Die mit Bezug auf das erfindungsgemäße Verfahren vorgestellten bevorzugten Ausführungsformen und deren Vorteile gelten entsprechend für das erfindungsgemäße Haushaltsgerät.

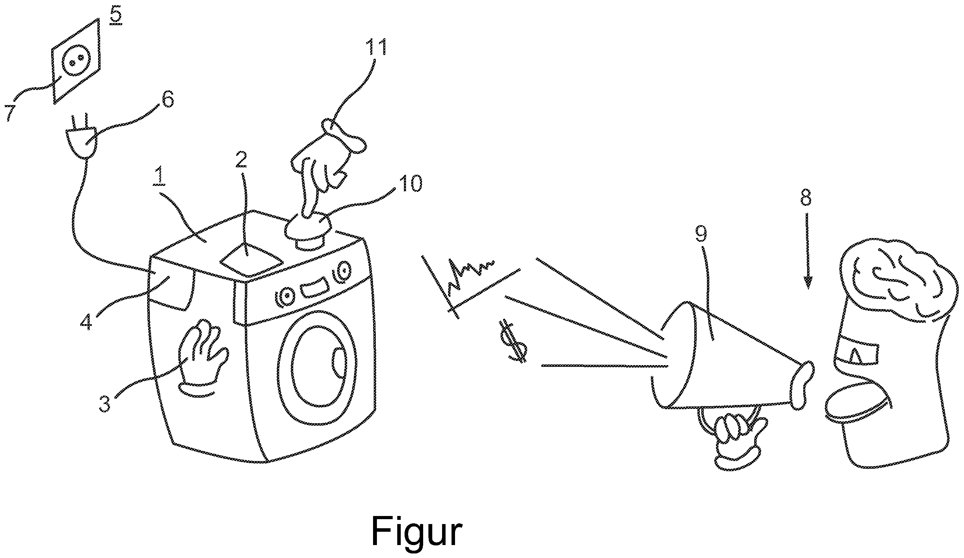

Weitere Merkmale der Erfindung ergeben sich aus den Ansprüchen, der Figur und der Figurenbeschreibung. Alle vorstehend in der Beschreibung genannten Merkmale und Merkmalskombinationen sowie die nachfolgend in der Figurenbeschreibung genannten und/oder in der Figur alleine gezeigten Merkmale und Merkmalskombinationen sind nicht nur in der jeweils angegebenen Kombination, sondern auch in anderen Kombinationen oder in Alleinstellung verwendbar.

Die Erfindung wird nun anhand eines bevorzugten Ausführungsbeispiels sowie unter Bezugnahme auf die Zeichnung näher erläutert. Die einzige Figur zeigt dabei in schematischer Darstellung ein Haushaltsgerät gemäß einer Ausführungsform der Erfindung, welches Daten von einer geräteexternen Vorrichtung empfängt. Anhand der Darstellung gemäß der Figur wird ein Verfahren gemäß einer Ausführungsform der Erfindung näher erläutert.

Die Figur zeigt ein Haushaltsgerät 1, welches im Ausführungsbeispiel eine Waschmaschine ist. Das Haushaltsgerät 1 umfasst eine interne Steuereinheit 2, welche ein Mikrocontroller sein kann. Die interne Steuereinheit 2 ist mit einer schematisch dargestellten Empfangseinrichtung 3 gekoppelt und kann über die Empfangseinrichtung 3 Daten empfangen. Das Haushaltsgerät 1 wird mit Hilfe einer Spannungsversorgungseinrichtung 4 mit einem elektrischen Versorgungsnetz 5 gekoppelt und mit elektrischer Energie aus dem Versorgungsnetz 5 versorgt. Das Anschließen des Haushaltsgeräts 1 an das Versorgungsnetz 5 geschieht durch ein Verbinden eines Steckers 6 mit einer Steckdose 7.

Die Spannungsversorgungseinrichtung 4 kann zum Beispiel ein Netzteil umfassen, welches eine Betriebsgleichspannung bereitstellt, mit welcher die interne Steuereinheit 2 versorgt wird. Die Empfangseinrichtung 3 kann zum Beispiel zum Empfangen von Daten ausgebildet sein, die über das Versorgungsnetz 5 gesandt werden (Power Line Communication). Alternativ kann die Empfangseinrichtung eine FunkEmpfangseinrichtung sein, die elektromagnetische Wellen empfängt, aufbereitet und Daten aus den empfangenen Wellen extrahiert.

Also kann die interne Steuereinheit 2 Daten empfangen, die an das Haushaltsgerät 1 gesandt werden, nämlich von einer geräteexternen Vorrichtung 8. Die Vorrichtung 8 ist im Ausführungsbeispiel ein intelligenter Stromzähler, welcher Informationen von einem Energieanbieter empfängt. Die Vorrichtung 8 kann alternativ eine Recheneinrichtung sein, die Informationen aus dem Internet gewinnt. Die Vorrichtung 8 umfasst eine Sendeeinrichtung 9, über welche Daten an das Haushaltsgerät 1 gesendet werden. Diese Daten empfängt dann die Empfangseinrichtung 3.

Von dem Energieanbieter empfängt die Vorrichtung 8 solche Daten, die Informationen über die Versorgung mit der Energie umfassen, wie beispielsweise:
- über eine Erzeugungsart der Energie, mit welcher das Haushaltsgerät 1 versorgt wird; dies kann erneuerbare Energie oder konventionelle Energie sein, dies kann auch eine Unterscheidung in Eigenproduktion oder Fremdproduktion sein,
- über einen Belastungszustand des Versorgungsnetzes 5,
- über den aktuellen Preis für eine vorbestimmte Menge der Energie,
- über den Energieerzeuger.

Außerdem empfängt die Vorrichtung 8 eine Information darüber, welche Energieanbieter momentan verfügbar sind und zu welchem Preis sie die Energie anbieten. Die Vorrichtung 8 überträgt all diese Informationen umfassende Daten an die Empfangseinrichtung 3. Diese Daten erhält die interne Steuereinheit 2. Die interne Steuereinheit 2 erhält somit Daten mit Informationen über die Erzeugungsart der Energie, über den Belastungszustand des Versorgungsnetzes 5, wie auch über den Preis für die Energie.

Die interne Steuereinheit 2 kann die Prozessabläufe des Haushaltsgeräts 1, also die Waschprozesse, abhängig von den empfangenen Informationen steuern, nämlich in einem Ökomodus des Haushaltsgeräts 1. In einen solchen Ökomodus kann das Haushaltsgerät 1 mittels einer Bedieneinrichtung überführt werden. Durch Betätigen der Bedieneinrichtung 10 kann eine Bedienperson 11 das Haushaltsgerät 1 in den Ökomodus verbringen oder diesen Ökomodus ausschalten. Zusätzlich zu dieser Möglichkeit stehen auch weitere Funktionen des Haushaltsgeräts 1 zur Verfügung. Die Bedienperson 11 kann nämlich einen Waschprozess sofort starten, unabhängig von der aktuellen Erzeugungsart der Energie sowie unabhängig von dem aktuellen Belastungszustand des Versorgungsnetzes 5. Die Bedienperson 11 kann aber auch ein bestimmtes Zeitintervall festlegen, innerhalb dessen ein Waschprozess beendet werden soll. Bezüglich des Ökomodus hat die Bedienperson 11 zwei Möglichkeiten: Sie kann den Ökomodus einschalten und zusätzlich das Zeitintervall festlegen; dann berücksichtigt die interne Steuereinheit 2 die Informationen über die Versorgung mit der Energie, wie beispielsweise die Erzeugungsart der Energie, den Belastungszustand des Versorgungsnetzes 5 und den Preis für die Energie; die interne Steuereinheit 2 schließt jedoch den Waschprozess innerhalb des festgelegten Zeitintervalls ab. Alternativ kann die Bedienperson 11 das Haushaltsgerät 1 in den Ökomodus überführen, ohne das Zeitintervall festzulegen. Dann wartet die interne Steuereinheit 2 mit dem Einleiten des Waschprozesses so lange ab, bis ein auf die empfangenen Informationen bezogenes vorbestimmtes Kriterium erfüllt ist.

Das vorbestimmte Kriterium beinhaltet, dass
- ein vorbestimmter Anteil von erneuerbarer Energie im Versorgungsnetz 5 zur Verfügung steht, dieser Anteil kann zum Beispiel 80 % betragen,
- eine den Belastungszustand des Versorgungsnetzes 5 charakterisierende Größe - zum Beispiel ein Prozentsatz - in einem vorbestimmten Wertebereich liegt, also das Versorgungsnetz 5 entlastet ist,
- der Preis für die vorbestimmte Menge der Energie in einem vorbestimmten Wertebereich liegt, zum Beispiel von 1 Cent bis 10 Cent pro Kilowattstunde.

Es kann auch vorgesehen sei, dass das vorbestimmte Kriterium durch eine Eingabe von der Bedienperson 11 festgelegt wird. Insbesondere kann es vorgesehen sein, dass bestimmte Parameter oder Wertebereiche von der Bedienperson 11 auswählbar sind.

Die interne Steuereinheit 2 überprüft im Ökomodus also, ob das vorbestimmte Kriterium erfüllt ist oder nicht. Ist dieses Kriterium erfüllt, so startet die interne Steuereinheit 2 ein zuvor durch die Bedienperson 11 ausgewähltes Programm des Haushaltsgeräts 1. Dies geschieht durch Inbetriebnahme einer Mehrzahl von elektrischen Verbrauchern, die in dem Haushaltsgerät 1 angeordnet sind.

Die interne Steuereinheit 2 kann somit einen Waschprozess des Haushaltsgeräts dann einleiten, wenn eine "saubere Energie" im Versorgungsnetz 5 zur Verfügung steht und das Versorgungsnetz 5 nicht überlastet ist. Darüber hinaus sorgt die interne Steuereinheit 2 dafür, dass ein Waschprozess nur dann eingeleitet wird, wenn die Energie preisgünstig ist.

### Bezugszeichenliste

- 1: Haushaltsgerät
- 2: interne Steuereinheit
- 3: Empfangseinrichtung
- 4: Spannungsversorgungseinrichtung
- 5: Versorgungsnetz
- 6: Stecker
- 7: Steckdose
- 8: externe Vorrichtung
- 9: Sendeeinrichtung
- 10: Bedieneinrichtung
- 11: Bedienperson

## Patentansprüche

1. Verfahren zum Betreiben eines Haushaltsgeräts (1) mit einer Steuereinrichtung, welches mit elektrischer Energie aus einem elektrischen Versorgungsnetz (5) versorgt wird, mit den Schritten:
- Empfangen von Daten durch eine Steuereinrichtung, wobei die Daten Informationen über eine Erzeugungsart der elektrischen Energie umfassen,
- Überprüfen durch die Steuereinrichtung, ob ein auf diese Informationen bezogenes vorbestimmtes Kriterium erfüllt ist,
- Erzeugen eines Steuersignals durch die Steuereinrichtung nach Erfülltsein des vorbestimmten Kriteriums, wobei das Steuersignal eine Änderung eines Betriebszustands des Haushaltsgeräts (1) veranlasst.

2. Verfahren nach Anspruch 1, bei welchem das vorbestimmte Kriterium umfasst, dass die Energie, mit welcher das Haushaltsgerät (1) versorgt wird, zumindest einen vordefinierten Anteil von erneuerbarer Energie umfasst.

3. Verfahren nach Anspruch 2, bei welchem das vorbestimmte Kriterium umfasst, dass die Energie zumindest einen vordefinierten Anteil von Energie aus einem Wasserkraftwert und/oder einer Solaranlage und/oder einem Windkraftwerk und/oder einem Biomassekraftwerk umfasst.

4. Verfahren nach einem der vorhergehenden Ansprüche, bei welchem die empfangenen Daten Informationen über einen Belastungszustand des elektrischen Versorgungsnetzes (5) beinhalten.

5. Verfahren nach Anspruch 4, bei welchem das vorbestimmte Kriterium umfasst, dass eine den Belastungszustand des Versorgungsnetzes (5) wiedergebende Größe in einem vorbestimmten Wertebereich liegt.

6. Verfahren nach einem der vorhergehenden Ansprüche, bei welchem die Steuereinrichtung solche Daten empfängt und verarbeitet, die Informationen über einen aktuellen Preis für eine vorbestimmte Menge der Energie umfassen, wobei das vorbestimmte Kriterium umfasst, dass der Preis in einem vorbestimmten Wertebereich liegt.

7. Verfahren nach einem der vorhergehenden Ansprüche, bei welchem das vorbestimmte Kriterium durch eine Eingabe in die Steuereinrichtung festgelegt wird.

8. Verfahren nach einem der vorhergehenden Ansprüche, bei welchem die Änderung des Betriebszustands des Haushaltsgeräts (1) umfasst, dass ein zuvor ausgewähltes Programm des Haushaltsgeräts (1) gestartet oder fortgesetzt wird.

9. Verfahren nach einem der vorhergehenden Ansprüche, bei welchem die Änderung des Betriebszustands des Haushaltsgeräts (1) umfasst, dass ein elektrischer Verbraucher des Haushaltsgeräts in Betrieb genommen wird.

10. Verfahren nach einem der vorhergehenden Ansprüche, bei welchem die Steuereinrichtung eine interne Steuereinrichtung (2) des Haushaltsgeräts (1) ist und mit dem Steuersignal eine Komponente des Haushaltsgeräts (1) angesteuert wird.

11. Verfahren nach einem der Ansprüche 1 bis 9, bei welchem die Steuereinrichtung eine von dem Haushaltsgerät (1) getrennte Einrichtung, insbesondere eine geräteexterne Vorrichtung (8), ist und das Steuersignal über einen Übertragungskanal an eine interne Steuereinheit (2) des Haushaltsgeräts (1) gesendet wird.

12. Verfahren nach einem der vorhergehenden Ansprüche, bei welchem das vorbestimmte Kriterium durch eine Eingabe in die Steuereinrichtung, insbesondere mittels einer Eingabeeinrichtung, festlegbar ist.

13. Haushaltsgerät (1) mit einer internen Steuereinheit (2) zum Steuern von Prozessabläufen des Haushaltsgeräts (1), mit einer Spannungsversorgungseinrichtung (4) zum Koppeln des Haushaltsgeräts (1) mit einem elektrischen Versorgungsnetz (5), wobei das Haushaltsgerät (1) mit Energie aus dem Versorgungsnetz (5) versorgbar ist, **dadurch gekennzeichnet, dass** das Haushaltsgerät (1) zur Durchführung des Verfahrens nach einem der Ansprüche 1 bis 12 in einen Ökomodus überführbar ist.

14. Haushaltsgerät nach Anspruch 13, **dadurch gekennzeichnet, dass** die interne Steuereinheit (2) mit einer Bedieneinrichtung (10) gekoppelt ist, mittels welcher das Haushaltsgerät (1) in den Ökomodus überführbar ist.

15. Haushaltsgerät nach Anspruch 13 oder 14, **dadurch gekennzeichnet, dass** das Haushaltsgerät (1) eine mit der internen Steuereinheit (2) gekoppelten Empfangseinrichtung (3) aufweist, dass die internen Steuereinheit (2) dazu ausgelegt ist, über die Empfangseinrichtung (3) Daten, die Informationen über die Versorgung mit der Energie umfassen, insbesondere Informationen über eine Erzeugungsart der elektrischen Energie und/oder über einen Belastungszustand des elektrischen Versorgungsnetzes (5), von einer geräteexternen Vorrichtung (8) zu empfangen (2), dass die interne Steuereinheit (2) dazu ausgelegt ist, zu überprüfen, ob das auf diese Informationen bezogenes vorbestimmtes Kriterium erfüllt ist, dass die interne Steuereinheit (2) dazu ausgelegt ist, einen Betriebszustand des Haushaltsgeräts (1) unter Ausgabe eines Steuersignals nach Erfülltsein des vorbestimmten Kriteriums zu ändern.

16. Haushaltsgerät nach Anspruch 13 oder 14, **dadurch gekennzeichnet, dass** das Haushaltsgerät (1) dazu ausgelegt ist, dass über einen Übertragungskanal Steuersignale von einer geräteexternen Vorrichtung (8) an die interne Steuereinheit (2) des Haushaltsgeräts (1) gesendet werden, und dass ein Betriebszustand des Haushaltgerätes (1) anhand dieser Steuersignale geändert wird.

## Claims

1. Method for operating a domestic appliance (1) with a control device which is supplied with electrical energy from an electrical power supply (5), having the steps:
- receiving data by means of a control device, wherein the data comprises information relating to a type of production of electrical energy,
- verification by means of the control device as to whether a predetermined criterion relating to this information is fulfilled,
- generating a control signal by means of the control device after the predetermined criterion has been fulfilled, wherein the control signal triggers a change in an operating state of the domestic appliance (1).

2. Method according to claim 1, in which the predetermined criterion means that energy, with which the domestic appliance (1) is supplied, comprises at least one predefined portion of renewable energy.

3. Method according to claim 2, in which the predetermined criterion means that the energy comprises at least one predefined portion of energy from a hydro-electric power station and/or a solar energy plant and/or a wind power plant and/or a biomass power plant.

4. Method according to one of the preceding claims, in which the received data contains information relating to a load state of the electrical power supply (5).

5. Method according to claim 4, in which the predetermined criterion means that a variable that reproduces the load state of the power supply (5) lies in a predetermined value range.

6. Method according to one of the preceding claims, in which the control device receives and processes such data, which comprises information relating to a current price for a predetermined quantity of energy, wherein the predetermined criterion means that the price lies in a predetermined value range.

7. Method according to one of the preceding claims, in which the predetermined criterion is fixed by an input into the control device.

8. Method according to one of the preceding claims, in which the change in the operating state of the domestic appliance (1) means that a previously selected program of the domestic appliance (1) is started or continued.

9. Method according to one of the preceding claims, in which the change in the operating state of the domestic appliance (1) means that an electrical load of the domestic appliance is put into operation.

10. Method according to one of the preceding claims, in which the control device is an internal control device (2) of the domestic appliance (1) and a component of the domestic appliance (1) is controlled with the control signal.

11. Method according to one of claims 1 to 9, in which the control device is a device which is separate from the domestic appliance (1), in particular an external apparatus (8), and the control signal is sent via a transmission channel to an internal control unit (2) of the domestic appliance (1).

12. Method according to one of the preceding claims, in which the predetermined criterion can be fixed by an input into the control device, in particular by means of an input device.

13. Domestic appliance (1) having an internal control unit (2) for controlling process cycles of the domestic appliance (1), having a voltage supply device (4) for coupling the domestic appliance (1) to an electrical power supply, wherein the domestic appliance (1) can be supplied with energy from the power supply (5), **characterised in that** the domestic appliance (1) can be switched into an Eco mode in order to carry out the method according to one of claims 1 to 12.

14. Domestic appliance according to claim 13, **characterised in that** the internal control unit (2) is coupled to an operator control (10), by means of which the domestic appliance (1) can be switched into the Eco mode.

15. Domestic appliance according to claim 13 or 14, **characterised in that** the domestic appliance (1) has a receive device (3) coupled to the internal control unit (2), that the internal control unit (2) is designed to receive, via the receive device (3), data comprising information relating to the energy supply, in particular information relating to a type of production of the electrical energy and/or a load state of the electrical power supply (5), from an external apparatus (8), that the internal control unit (2) is designed to verify whether the predetermined criterion relating to this information is fulfilled, that the internal control unit (2) is designed to change an operating state of the domestic appliance (1) by outputting a control signal after the predetermined criterion has been fulfilled.

16. Domestic appliance according to claim 13 or 14, **characterised in that** the domestic appliance (1) is designed such that control signals are sent via a transmission channel from an external apparatus (8) to the internal control unit (2) of the domestic appliance (1) and that an operating state of the domestic appliance (1) is changed on the basis of these control signals.

## Revendications

1. Procédé destiné au fonctionnement d'un appareil électroménager (1) avec un dispositif de commande, lequel appareil électroménager est alimenté en énergie électrique issue d'un réseau d'alimentation électrique (5), avec les étapes :
- de réception de données par le biais d'un dispositif de commande, dans lequel les données comprennent des informations relatives à un mode de production de l'énergie électrique,
- de vérification par le biais du dispositif de commande si un critère prédéterminé se rapportant à ces informations est respecté,
- de génération d'un signal de commande par le biais du dispositif de commande après le respect du critère prédéterminé, dans lequel le signal de commande provoque une modification d'un état de fonctionnement de l'appareil électroménager (1).

2. Procédé selon la revendication 1, dans lequel le critère prédéterminé comprend le fait que l'énergie avec laquelle l'appareil électroménager (1) est alimenté comprend au moins une part prédéfinie d'énergie renouvelable.

3. Procédé selon la revendication 2, dans lequel le critère prédéterminé comprend le fait que l'énergie comprend au moins une part prédéfinie d'énergie issue d'une centrale hydroélectrique et/ou d'une centrale solaire et/ou d'une centrale éolienne et/ou d'une centrale de biomasse.

4. Procédé selon l'une des revendications précédentes, dans lequel les données reçues contiennent des informations relatives à un état de charge du réseau d'alimentation électrique (5).

5. Procédé selon la revendication 4, dans lequel le critère prédéterminé comprend le fait qu'une grandeur restituant l'état de charge du réseau d'alimentation (5) se situe dans une plage de valeurs prédéterminées.

6. Procédé selon l'une des revendications précédentes, dans lequel le dispositif de commande reçoit et traite des données qui comprennent des informations relatives à un prix en cours pour une quantité prédéterminée de l'énergie, dans lequel le critère prédéterminé comprend le fait que le prix se situe dans une plage de valeurs prédéterminées.

7. Procédé selon l'une des revendications précédentes, dans lequel le critère prédéterminé est établi par le biais d'une entrée dans le dispositif de commande.

8. Procédé selon l'une des revendications précédentes, dans lequel la modification de l'état de fonctionnement de l'appareil électroménager (1) comprend le fait qu'un programme de l'appareil électroménager (1) choisi au préalable est démarré ou poursuivi.

9. Procédé selon l'une des revendications précédentes, dans lequel la modification de l'état de fonctionnement de l'appareil électroménager (1) comprend le fait qu'un consommateur électrique de l'appareil électroménager est mis en service.

10. Procédé selon l'une des revendications précédentes, dans lequel le dispositif de commande est une unité de commande interne (2) de l'appareil électroménager (1) et un composant de l'appareil électroménager (1) est commandé avec le signal de commande.

11. Procédé selon l'une des revendications 1 à 9, dans lequel le dispositif de commande est un dispositif distinct de l'appareil électroménager (1), en particulier un dispositif externe à l'appareil (8), et le signal de commande est envoyé par le biais d'un canal de transmission à une unité de commande interne (2) de l'appareil électroménager (1).

12. Procédé selon l'une des revendications précédentes, dans lequel le critère prédéterminé peut être établi par le biais d'une entrée dans le dispositif de commande, en particulier au moyen d'un dispositif d'entrée.

13. Appareil électroménager (1) avec une unité de commande interne (2) en vue de la commande du déroulement d'un processus de l'appareil électroménager (1), avec un dispositif d'alimentation en tension (4) destiné au couplage de l'appareil électroménager (1) à un réseau d'alimentation électrique (5), dans lequel l'appareil électroménager (1) peut être alimenté en énergie issue du réseau d'alimentation (5), **caractérisé en ce que** l'appareil électroménager (1) peut passer en mode d'économie d'énergie en vue de la réalisation du procédé selon l'une des revendications 1 à 12.

14. Appareil électroménager selon la revendication 13, **caractérisé en ce que** l'unité de commande interne (2) est couplée à un dispositif de manipulation (10) au moyen duquel l'appareil électroménager (1) peut passer en mode d'économie d'énergie.

15. Appareil électroménager selon la revendication 13 ou 14, **caractérisé en ce que** l'appareil électroménager (1) présente un dispositif de réception (3) couplé à l'unité de commande interne (2), **en ce que** l'unité de commande interne (2) est conçue pour recevoir, par le biais du dispositif de réception (3) des données qui comprennent des informations relatives à l'alimentation en énergie, en particulier des informations relatives à un mode de production de l'énergie électrique et/ou relatives à un état de charge du réseau d'alimentation électrique (5), par un dispositif externe à l'appareil (8), **en ce que** l'unité de commande interne (2) est conçue pour vérifier si le critère prédéfini se rapportant à ces informations est respecté, **en ce que** l'unité de commande interne (2) est conçue pour modifier un état de fonctionnement de l'appareil électroménager (1) par l'émission d'un signal de commande après le respect du critère prédéterminé.

16. Appareil électroménager selon la revendication 13 ou 14, **caractérisé en ce que** l'appareil électroménager (1) est conçu de sorte que des signaux de commande sont envoyés par le biais d'un canal de transmission par un dispositif externe à l'appareil (8) à l'unité de commande interne (2) de l'appareil électroménager (1) et **en ce qu'**un état de fonctionnement de l'appareil électroménager (1) est modifié à l'aide de ces signaux de commande.
